# EUROPÄISCHE PATENTANMELDUNG

(11) **EP 0 863 215 A1**
(43) Veröffentlichungstag der Anmeldung: **09.09.1998**
(21) Anmeldenummer: 98103548.8
(22) Anmeldetag: 28.02.1998
(51) Int. Cl.: C21B 7/20

(54) **Beschickungsgichtverschluss für Schachtöfen**

(30) Priorität: 07.03.1997 DE 19709329
(71) Anmelder: SMS SCHLOEMANN-SIEMAG AKTIENGESELLSCHAFT, 40237 Düsseldorf (DE)
(72) Erfinder: Heinrich, Peter, Dr., 47608 Geldern (DE); Hille, Hartmut, 47447 Moers (DE); Otremba, Werner, 46145 Oberhausen (DE); Ricke, Marco, 48653 Coesfeld (DE)
(74) Vertreter: Valentin, Ekkehard

(57) **Zusammenfassung**

Die Erfindung betrifft einen Gichtverschluß für Schachtöfen mit einem unter den Einschleusbunkern (1) angeordneten Guteinlauftrichter (2) mit Einschleusrohr (3) und einem darunter befindlichen, rotierenden Schurrenträger (4) mit kippbarer Schurre (5).

Der Schurrenträger (4) wird elektromotorisch (6) über Ritzel (8) und Zahnkranz (7) in Drehung versetzt. Zusammen mit dem Schurrenträger (4) rotiert die Schurre (5).

Der Drehantrieb (6, 7, 8) für den Schurrenträger (4) und der Kippantrieb (13) für die Schurre (5) befinden sich, voneinander getrennt, außerhalb des Ofenraumes.

Die Abdichtung des rotierenden Schurrenantriebes (4) gegenüber den feststehenden Teilen, dem auf dem Ofentragring (10) befestigten Tragkorb (16) und dem Einschleusrohr (3) erfolgt über ringförmige Abdichtungen (14.1) und (14.2).

## Beschreibung

Die Erfindung betrifft einen Gichtverschluß für Schachtöfen, insbesondere Hochöfen mit einem Guteinlauftrichter mit Einschleusrohr, einem rotierenden, nicht höhenverstellbaren Schurrenträger mit Drehantrieb, einer schwenkbaren Schurre im Ofeninneren mit außerseitigen Antriebsmitteln sowie Abdichtungen zwischen den rotierenden und feststehenden Teilen.

Für das Einfüllen und Verteilen der Chargen zum Begichten von Schachtöfen sind seit langem Vorrichtungen bekannt, die nach dem sogenannten Mcffee-Prinzip gebaut sind. Bei dieser Konstruktion, einem Glocken-Gichtverschluß, ist im oberen Bereich eine kleine Glocke und im unteren Bereich eine große Glocke angeordnet. Die obere der übereinander angeordneten Glocken oder Trichter ist drehbar.

Eine Verbesserung des McKee-Gichtverschlusses ist eine bekannte Konstruktion, bei der die untere große Gichtglocke keinen gasdichten Abschluß bilden muß, weil der mit der Glocke verschlossene Drehverteiler in einer dicht abgeschlossenen Hülle angeordnet ist.

Bei einer weiteren Verbesserung nach der DE 36 32 724 C2 kann die Problematik der Abdichtung zwischen unterer verteilerglocke und unterer Schleusenkammer vernachlässigt werden, indem der obere Trichter mittels einer mit Beschickungsklappen ausgerüsteten feststehenden Haube als druckdichte abschließbare Schleusenkammer ausgebildet ist.

Aus der DE-OS-24 04 647 ist eine Vorrichtung zum Antrieb bzw. zur Bewegung eines Geräts zum Beschicken eines Hochofens mit Rohstoffen bekannt, wobei eine Verteilungsschüttrinne mit den unteren Enden eines Innenzylinders und Außenzylinders verbunden ist, die zugleich drehbar, im Verhältnis zueinander axial verschiebbar und unabhängig voneinander gelagert sind. Die Verteilungsschüttrinne ist zugleich mit dem Innenzylinder und Außenzylinder drehbar und mit der Vertikalbewegung des Innenzylinders bzw. Außenzylinders gegenüber dem Außenzylinder bzw. Innenzylinder kippbar.

Die Verteilungsschüttrinne wirkt mit am Hochofen außenseitig angeordneten Antriebsmitteln, mit einem elektrischen Antrieb für den Innenzylinder sowie einem hydraulischen Antrieb zum Heben und Senken des Außenzylinders.

Der Innenzylinder oder der Außenzylinder weisen einen sich auf einem Stützmittel abstützenden Flansch auf, der Außenzylinder oder Innenzylinder sind von einem Zahnkranz getragen. Zwischen dem Innenzylinder und dem Außenzylinder ist ein Dichtungsmittel vorgesehen.

Aus der AS-10 13 681 ist eine Abdichtungsvorrichtung an drehbaren Gichtverschlüssen von Hochöfen bekannt, mit einem an dem Drehtrichter befestigten Druckring und einer dazu passenden ortsfesten, ringförmigen Dichtungsmasse, wobei die dichtung von Druckring Und Dichtungsmasse durch Federkraft bewirkt wird.

In einem auf der Gichthaube gasdicht befestigten Ringgehäuse sind nachstellbare Federn angeordnet, welche die ringförmige Dichtungsmasse an den sich mit dem Drehtrichter drehenden Schleifring stetig anpressen.

Der Anpreßdruck der Federn ist durch eine aus einer nachstellbaren Spannschraube bestehenden Spannvorrichtung veränderlich einstellbar.

Bei anderen bekannten Beschickungsvorrichtungen für Hochöfen nach der DE 20 35 458, DE 20 65 460 u. a., die an der Gicht mit Gegendruck betrieben werden, ist ein feststehender, zentraler Guteinlauf vorhanden, über den der Möller auf eine drehbare Schurre fällt. Die Drehlagerung und die Antriebsteile der Schurre befinden sich im Ofenraum.

Auch diese zuletzt beschriebene Beschickungsvorrichtung ist in vielfältiger Weise verbessert worden. So wurden z.B. die Drehlagerungs- und Antriebsteile der Schurre in einem eigenen Gehäuse angeordnet, das vom übrigen Ofenraum abgeteilt ist. In das erwähnte Gehäuse mündet eine Spülgaseinführung. Dadurch soll verhindert werden, daß heiße und staubbeladene Hochofengase eindringen.

Aufgabe der vorliegenden Erfindung ist es, einen glockenlosen Gichtverschluß für Schachtöfen dahingehend zu verbessern, daß dieser eine möglichst niedrige Bauform aufweist, die konstruktive Ausführung einfach, übersichtlich und wartungsfreundlich ist, und daß vor allem die Antriebe für die Dreh- und Kippbewegungen des Schurrenträgers und der Schurre nicht in Verbindung mit dem Ofenraum stehen.

Diese Aufgaben werden erfindungsgemäß in der Weise gelöst, wie es die kennzeichnenden Merkmale der unabhängigen Ansprüche 1 und 2 aussagen. Vorteilhafte Ausgestaltungen der Erfindung finden sich in den Merkmalen der abhängigen Unteransprüche 3 - 8.

Bei dem erfindungsgemäßen Gichtverschluß mit unter den Einschleusbunkern angeordnetem Guteinlauftrichter mit Einschleusrohr nach Anspruch 1, dreht sich der unter dem Einschleusrohr angeordnete Schurrenträger mit der kippbaren Schurre, die in die Gasfanghaube des Ofens hineinragt. Die Bauhöhe des Schurrenträgers ist niedrig gehalten und innerhalb des Höhenmaßes dieses Schurrenträgers, gänzlich außerhalb des Ofenraumes, befinden sich die räumlich getrennt voneinander angeordneten Antriebe für die Drehbewegung des Schurrenträgers mit Schurre und für die Kippbewegung der Schurre.

Beide Antriebe arbeiten völlig unabhängig voneinander. Der Drehantrieb für den Schurrenträger besteht vorzugsweise aus Zahnkranz und Ritzel, angetrieben über einen Elektromotor. Gegebenenfalls kann jedoch eine andere bekannte Antriebsform angewendet werden.

Der Antrieb für die Ausführung der Kippbewegungen der Schurre kann ein hydraulischer, elektromechanischer oder ein mechanischer Antrieb sein.

Dreh- und Kippantriebe arbeiten, da sie außerhalb des Ofenraumes installiert sind, unter Atmosphärendruck.

Im Unterschied zu den überlagerten Dreh-Kipp-Bewegungen bei den Schurrenantrieben des Standes der Technik, werden diese Bewegungen beim erfindungsgemäßen Schurrenträger mit Schurre in eine reine Drehbewegung und in eine reine Kippbewegung zerlegt.

Für die Abdichtung des rotierenden Schurrenträgers gegenüber dem feststehenden Einschleusrohr des Guteinlauftrichters werden Schleifringdichtungen verwendet. Spezielle Kohle-Ringdichtungen haben sich für diese Zwecke besonders bewährt.

Bei der alternativen Ausführung des Gichtverschlusses nach Anspruch 2 rotiert nicht nur der Schurrenträger mit Schurre, sondern auch das mit dem Schurrenträger verbundene Einschleusrohr mit dem darüber angeordneten Guteinlauftrichter.

Bei dieser Ausführung erfolgt die Abdichtung gegenüber dem feststehenden Auslauf des Einschleusbunkers und dem mitdrehendem Guteinlauftrichter mit nachgeschaltetem Einschleusrohr durch Schleifringdichtungen, die am Auslauf des Einschleusbunkers angebracht sind.

Ansonsten gibt es gegenüber der zuvor beschriebenen Ausführung nach Anspruch 1 hier keine wesentlichen Abweichungen.

Beschädigte oder verschlissene Schurren lassen sich entweder nach oben oder seitlich ausbauen. Zum Ausbau einer Schurre nach oben werden zunächst die Schleifringdichtungen zwischen dem rotierenden Schurrenträger und dem feststehenden Einschleusrohr abgebaut.Sodann entfernt man den Deckel mit Mannloch innerhalb des Schurrenträgers. Die Schurre wird durch eine geeignete Vorrichtung gesichert, um anschließend die Verbindung der Schurre mit dem Guteinlauftrichter zu losen. Schließlich wird der Kippantrieb für die Schurre gelöst, das Einschleusrohr entfernt und die Schurre ausgebaut.

Der Ausbau der Schurre seitlich erfolgt über eine verschließbare Öffnung in der Gasfanghaube des Ofens.

Um den rotierenden Schurrenträger vor Hitzeeinwirkung zu schützen, wird der Boden des Schurrenträgers zweckmäßigerweise mit einer Kühleinrichtung versehen. Kühlmedium kann Wasser oder eine andere geeignete Flüssigkeit sein. Besonders günstig wirkt sich eine Zwangskühlung aus. Selbstverständlich kann sich, wenn es als notwendig erachtet wird, die Kühleinrichtung auch auf die Innenwand des Schurrenträgers erstrecken.

Anstelle einer o.g. Kühleinrichtung kann das Innere des Schurrenträgers auch teilweise oder gänzlich mit einem thermischen Schutz, beispielsweise einer Torkretierung von Feuerfestmaterial, versehen werden.

Des weiteren kann ein unterhalb des Schurrenträgers angebrachter trichterförmiger Temperaturschutz die Hitzeeinwirkung nach oben hin abschirmen. Dieser mit dem Schurrenträger sich drehende Temperaturschutz weist einen Schlitz für die kippbare Schurre auf.

Zwei Ausführungsbeispiele der erfindungsgemäßen Gichtverschlüsse für einen Hochofen werden nachstehend anhand von schematischen Zeichnungen näher erläutert.

Es zeigen
- Fig. 1: eine Seitenansicht des Gichtverschlusses, insbesondere des Schurrenträgers mit Schurre,
- Fig. 2: eine Vorderansicht von Schurrenträger mit Schurre und
- Fig. 3: eine Seitenansicht eines alternativen Gichtverschlusses, insbesondere des Schurrenträgers mit Schurre.

In den Patentfiguren 1 und 2 ist ein Ausführungsbeispiel des Gichtverschlusses nach den Patentansprüchen 1 sowie 3 bis 7 dargestellt.

Der Schurrenträger (4) rotiert mit der Schurre (5), während das Einschleusrohr (3) mit dem (nicht darge-gestellten) Guteinlauftrichter (2) feststeht.

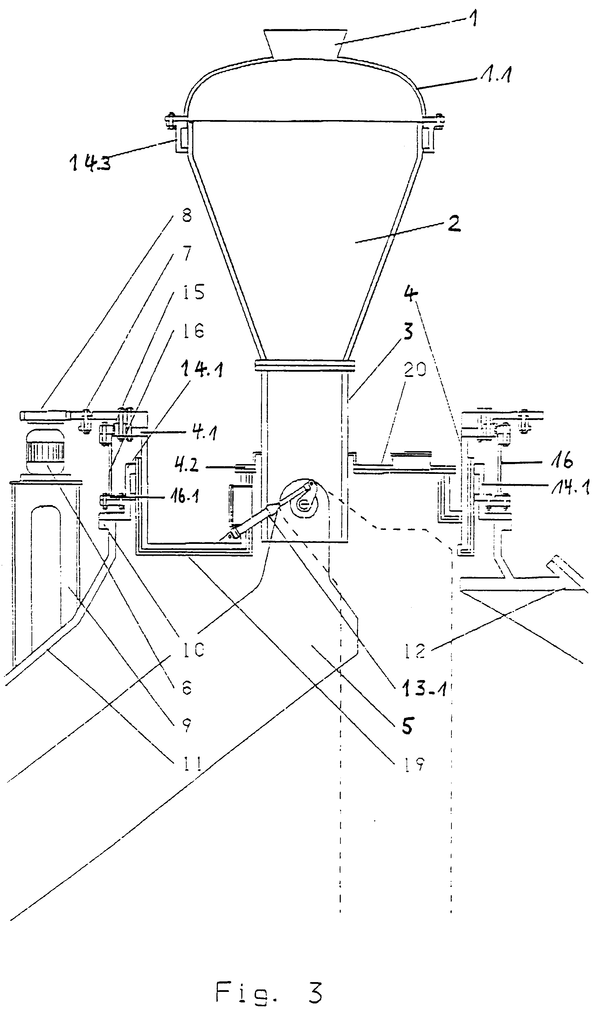

Fig. 3 zeigt eine alternative Ausführung des Gichtverschlusses nach Patentanspruch 2. Hier drehen sich außer dem Schurrenträger (4) mit Schurre (5) auch das Einschleusrohr (3) und der Guteinlauftrichter (2) mit. Bei diesem Beispiel sind die Schleifringdichtungen (14.3) zwischen dem Guteinlauftrichter (2) und dem Einschleusbunker (1) am Auslauf (1.1) angeordnet.

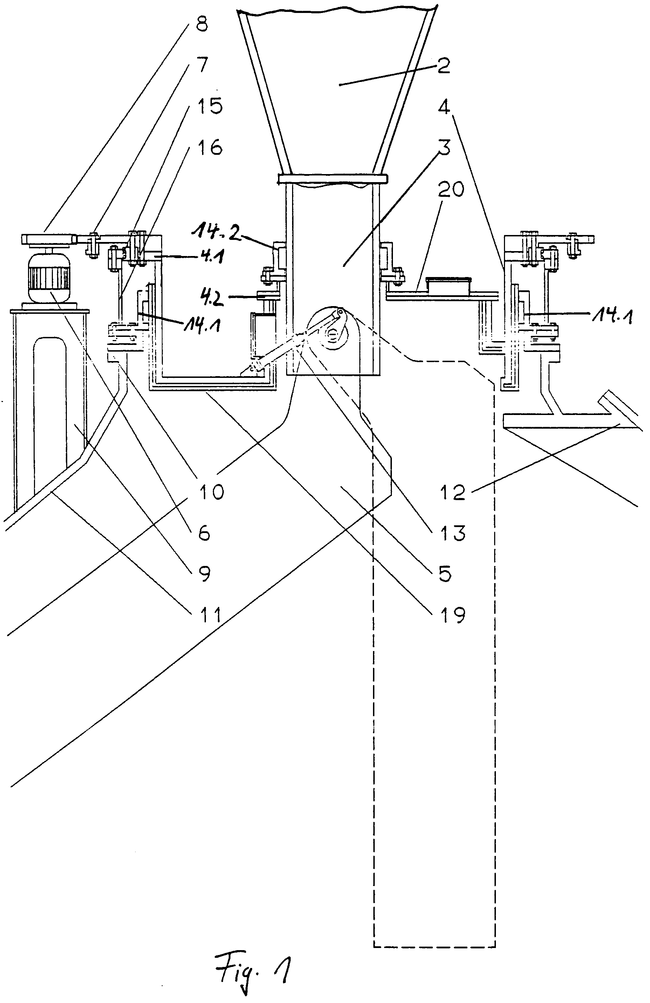

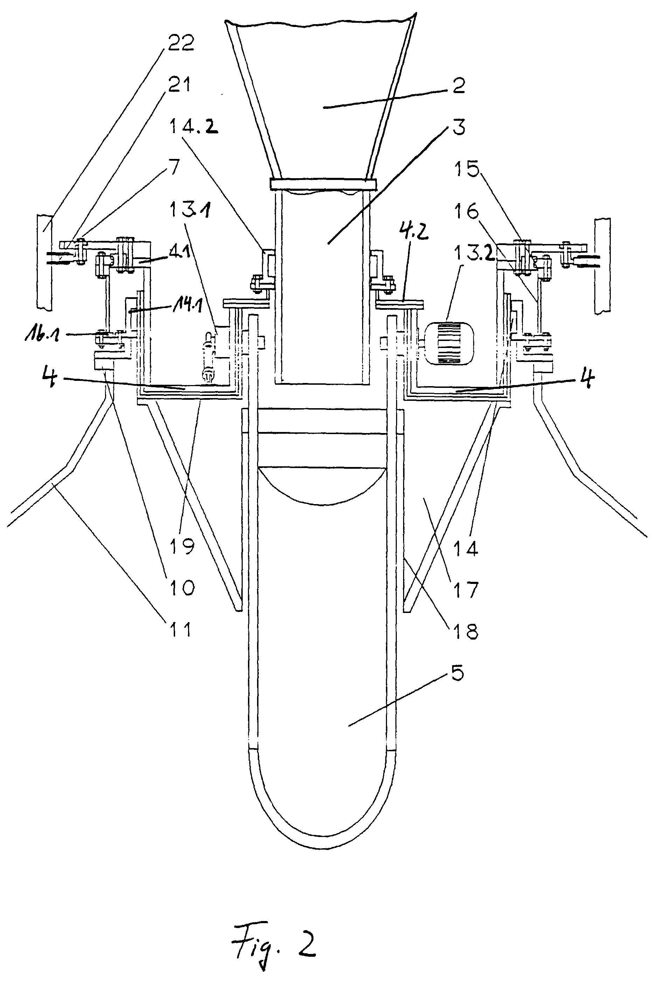

Entsprechend Fig. 1 und 2 wird der Möller zur Beschickung des Hochofens aus einem nicht dargestellten Einschleusbunker in einen darunter befindlichen Guteinlauftrichter (2) ausgeschleust.

Vom Guteinlauftrichter (2) aus gelangt der Möller über ein Einschleusrohr (3) auf eine innerhalb des Schurrenträgers (4) angeordnete, kipp- und drehbare Schurre (5) und von dort in den oberen Teil des Hochofens.

Der in einer Kugeldrehverbindung (15) gelagerte Schurrenträger (4) mit Schurre (5) wird durch einen Drehantrieb, bestehend aus Ritzel (8), Zahnkranz (7) und Elektromotor (6) in Rotation versetzt. Der gesamte Schurrenträger-Antrieb (6, 7, 8) ist auf einer Konsole (9) angeordnet, die sich auf der Gasfanghaube (11) des Hochofens abstützt.

Der hydraulische (13.1) bzw. elektrische Kippantrieb (13.2) zur Ausführung der Kippbewegungen der Schurre (5) gegenüber der Hochofenachse befindet sich innerhalb des Schurrenträgers (4) außerhalb des Ofenschachtes.

In Fig. 1 ist die geneigt dargestellte Schurre (5) zusätzlich gestrichelt in senkrechter Stellung der Endstellung gezeigt.

Die Dichtungen zur Abdichtung des Hochofens im Bereich des rotierenden Schurrenträgers (4) gegenüber dem feststehenden Einschleusrohr (3) sind mit (14.2), die Dichtungen zwischen rotierendem Schurrenträger (4) und feststehendem Ofentragring (10) sind mit (14.1) bezeichnet.

Die Kugeldrehverbindungen (15) und der Flansch (4.1) des Schurrenträgers (4) sind auf Tragkörben (16) gelagert.

Zum Ausgleich eventueller seitlicher Bewegungen des Schurrenträgers (4) werden Führungsrollen (21) an Stützen (22) angeordnet, die sich auf der Gasfanghaube (11) abstützen.

Auch am Umfang des Einschleusrohres (3) können zum Ausgleich von evtl. Bewegungen sich auf dem Schurrenträger abstützende Führungsrollen angebracht werden.

Innerhalb des Schurrenträgers (4) ist auf der rechten Bildseite ein Mannloch mit Deckel (20) angeordnet.

Der Schurrenträger (4) weist innenseitig mindestens am Boden eine Kühleinrichtung (19) auf.

In der Vorderansicht nach Fig. 2 ist der am Boden des Schurrenträgers (4) angebrachte Temperaturschutz (17) erkennbar. Ferner ist ein Schlitz (18) im Temperaturschutz (17) vorhanden, der ein Schwenken der Schurre (5) gestattet.

Schließlich ist in Fig. 1 eine verschließbare Öffnung (12) angedeutet, durch die gegebenenfalls der Ausbau einer beschädigten oder verschlissenen Schurre (5) vorgenommen werden kann.

Fig. 3 zeigt eine alternative Ausführung entsprechend Anspruch 2.

Bei dieser Ausführung rotiert das Einschleusrohr (3) und der darüber angeordnete Guteinlauftrichter (2) zusammen mit dem Schurrenträger (4) und der kippbaren Schurre (5) um die Ofenachse.

Die Abdichtung des rotierenden Guteinlauftrichters (2) gegenüber dem feststehenden Auslauf (1.1) des Einschleusbunkers (1) erfolgt durch eine ringförmige Abdichtung (14.3), die am feststehenden Auslauf (1.1) angebracht ist.

Die Abdichtung des rotierenden Schurrenträgers (4) erfolgt durch einen ringförmigen Abdichtring (14.1), der auf dem Ofentragring (10) der Gasfanghaube (11) neben dem Flansch (16.1) des Fangkorbes (16) angebracht ist.

Der rotierende Schurrenträger (4) ist auch bei dieser Ausführung mit einem Flansch (4.1) an einem Zahnkranz (7) befestigt, dieser ist in einer auf einem Fangkorb (16) angebrachten Kugeldrehverbindung (15) gelagert.

Die Drehbewegung des rotierenden Schurrenträgers (4) erfolgt außerhalb des Ofenraumes durch einen elektromotorischen Antrieb (6) mit Ritzel (8).

Der Fangkorb (16) ist auf dem Flansch des Ofentragringes (10) der Gasfanghaube (11) lösbar angeordnet, die Schwenk- oder Kippbewegung der Schurre (5) erfolgt gegenüber der Ofenachse innerhalb des rotierenden Schurrenträgers (4) duch einen hydraulischen (13.1) bzw. elektromechanischen Antrieb (13.2) außerhalb des Ofenraumes.

### Bezugsziffernliste:

- 1: Einschleusbunker
- 1.1: Auslauf
- 2: Guteinlauftrichter
- 3: Einschleusrohr
- 4: Schurrenträger
- 4.1: äußerer Flansch
- 4.2: innerer Flansch
- 5: Schurre
- 6: Antrieb Schurrenträger
- 7: Zahnkranz
- 8: Ritzel
- 9: Konsole
- 10: Ofentragring
- 11: Gasfanghaube
- 12: Öffnung in 11
- 13: Kippantrieb für 5
- 13.1: hydraulischer Kippantrieb
- 13.2: elektrischer Kippantrieb
- 14: Schleifringdichtung
- 14.1: Abdichtung gegenüber 4
- 14.2: Abdichtung gegenüber 3
- 14.3: Abdichtung gegenüber 2
- 15: Kugeldrehverbindung
- 16: Tragkorb
- 16.1: Flansch
- 17: Temperaturschutz
- 18: Schlitz in 17
- 19: Kühleinrichtung für 4
- 20: Mannloch mit Deckel
- 21: Führungsrollen
- 22: Stützen für 21

## Patentansprüche

1. Gichtverschluß für Schachtöfen, insbesondere Hochöfen mit einem Guteinlauftrichter mit Einschleusrohr, einem rotierenden, nicht höhenverstellbaren Schurrenträger mit Drehantrieb, einer schwenkbaren Schurre im Ofeninneren mit außerseitigen Antriebsmitteln sowie Abdichtungen zwischen den rotierenden und feststehenden Teilen, dadurch gekennzeichnet,
- daß der rotierende Schurrenträger (4) mit am Flansch (4.1) befestigtem Zahnkranz (7) in einer auf einem Fangkorb (16) angebrachten Kugeldrehverbindung (15) gelagert ist,
- daß die Drehbewegung des rotierenden Schurrenträgers (4) außerhalb des Ofenraumes durch einen elektromotorischen Antrieb (6) mit Ritzel (8) erfolgt,
- daß der Fangkorb (16) auf dem Ofentragring (10) der Gasfanghaube (11) angeordnet ist,
- daß die Schwenk- oder Kippbewegung der Schurre (5) gegenüber der Ofenachse innerhalb des rotierenden Schurrenträgers (4) durcn einen hydraulischen (13.1) bzw. elektromechanischen Antrieb (13.2) außerhalb des Ofenraumes erfolgt,
- daß am Ofentragring (10) neben dem Flansch (16.1) des Fangkorbes (16) eine ringförmige Abdichtung (14.1) gegenüber dem rotierenden Schurrenträger (4) und
- daß am inneren Flansch (4.2) des Schurrenträgers (4) eine ringförmige Abdichtung (14.2) gegenüber dem feststehenden Einschleusrohr (3) angeordnet ist.

2. Gichtverschluß für Schachtöfen, insbesondere Hochöfen mit einem Guteinlauftrichter mit Einschleusrohr, einem rotierenden, nicht höhenverstellbarem Schurrenträger mit Drehantrieb, einer schwenkbaren Schurre im Ofeninneren mit außerseitigen Antriebsmitteln sowie Abdichtungen zwischen den rotierenden und feststehenden Teilen, dadurch gekennzeichnet,
- daß der rotierende Schurrenträger (4) mit am Flansch (4.1) befestigtem Zahnkranz (7) in einer auf einem Fangkorb (16) angebrachten Kugeldrehverbindung (15) gelagert ist,
- daß die Drehbewegung des rotierenden Schurrenträgers (4) außerhalb des Ofenraumes durch einen elektromotorischen Antrieb (6) mit Ritzel (8) erfolgt,
- daß der Fangkorb (16) auf dem Ofentragring (10) der Gasfanghaube (11) angeordnet ist,
- daß die Schwenk- oder Kippbewegung der Schurre (5) gegenüber der Ofenachse innerhalb des rotierenden Schurrenträgers (4) durch einen hydraulischen (13.1) bzw. elektromechanischen Antrieb (13.2) außerhalb des Ofenraumes erfolgt,
- daß am Ofentragring (10) neben dem Flansch (16.1) des Fangkorbes (16) eine ringförmige Abdichtung (14.1) gegenüber dem rotierenden Schurrenträger (4) angeordnet ist,
- daß der innere Flansch (4.2) des rotierenden Schurrenträgers (4) mit dem Einschleusrohr (3) nichtlösbar verbunden ist,
- daß das Einschleusrohr (3) mit dem Guteinlauftrichter (2) lösbar verbunden ist und
- daß die Abdichtung des Guteinlauftrichters (2) gegenüber dem feststehenden Auslauf (1.1) des Einschleusbunkers (1) durch eine ringförmige Abdichtung (14.3) erfolgt.

3. Gichtverschluß für Schachtöfen und ähnliche Öfen nach Anspruch 1 oder 2,
dadurch gekennzeichnet,
daß der rotierende Schurrenträger (4) und das feststehende Einschleusrohr (3) bzw. das mit dem Schurrenträger (4) drehende Einschleusrohr (3) so ausgebildet sind, daß ein Ausbau der Schurre (5) nach oben möglich ist.

4. Gichtverschluß für Schachtöfen und ähnliche Öfen nach den Ansprüchen 1 oder 2,
dadurch gekennzeichnet,
daß zum seitlichen Ausbau der Schurre (5) an der Gasfanghaube (11) eine verschließbare Öffnung (12) vorgesehen ist.

5. Gichtverschluß für Schachtöfen und ähnliche Öfen nach den Ansprüchen 1 oder 2,
dadurch gekennzeichnet,
daß unterhalb des rotierenden Schurrenträgers (4) ein mitrotierender, mit einem Schlitz (18) für die Schurre (5) versehener, vorzugsweise trichterartiger Temperaturschutz (17) angeordnet ist.

6. Gichtverschluß für Schachtöfen und ähnliche Öfen nach den Ansprüchen 1 oder 2,
dadurch gekennzeichnet,
daß als Schleifringdichtungen (14) gleitende Kohle-Ringdichtungen anwendbar sind.

7. Gichtverschluß für Schachtöfen und ähnliche Öfen nach den Ansprüchen 1 oder 2,
dadurch gekennzeichnet,
daß der rotierende Schurrenträger (4) innenseitig bzw. außenseitig mindestens am Boden mit einer Kühleinrichtung (19) bzw. mit einem thermischen Schutz versehen ist.

8. Gichtverschluß für Schachtöfen und ähnliche Öfen nach Anspruch 7,
dadurch gekennzeichnet,
daß die Kühleinrichtung (19) vorzugsweise nach dem System der Zwangskühlung betrieben wird.
